# EUROPEAN PATENT SPECIFICATION

(11) **EP 0 394 204 B1**
(45) Date of publication and mention of the grant of the patent: **20.09.1995**
(21) Application number: 90830160.9
(22) Date of filing: 11.04.1990
(51) Int. Cl.: G21B 1/00, H05H 3/06

(54) **A system for producing neutrons and heat by nuclear fusion in a gas absorbed on a metal**
Verfahren zur Erzeugung von Neutronen und Wärme durch Nuklearfusion in einem Gas, das von einem Metall absorbiert ist
Dispositif de production de neutrons et de chaleur par fusion nucléaire dans un gaz absorbé par un métal

(30) Priority: 18.04.1989 IT 4786289
(43) Date of publication of application: 24.10.1990
(73) Proprietor: Ente per le nuove tecnologie, l'energia e l'ambiente ( ENEA), I-00198 Roma (IT)
(72) Inventor: Scaramuzzi, Francesco, I-00046 Grottaferrata (Roma) (IT); De Ninno, Antonella, I-00040 Monteporzio Catone (Roma) (IT); Podda, Salvatore, I-00153 Roma (IT); Frattolillo, Antonio, I-00041 Albano Laziale (Roma) (IT); Lollobattista, Giuseppe, I-00044 Frascati (Roma) (IT); Martone, Marcello, I-00046 Grottaferrata, Roma (IT); Mori, Luciano, I-00188 Roma (IT); Martinis, Lorenzo, I-00125 Roma (IT)
(74) Representative: Taliercio, Antonio

(56) References cited:
- FUSION TECHNOLOGY. vol. 16, November 1989, LAGRANGE PARK, ILLIN pages 391 - 396; Werle et al: "Trials to induce neutron emission from a Titanium-Deuterium system"
- FUSION TECHNOLOGY. vol. 16, November 1989, LAGRANGE PARK, ILLIN pages 383 - 387; Campbell et al: "A STUDY OF COLD FUSION IN DEUTERATED TITANIUM SUBJECTED TO HIGH-CURRENT DENSITIES"
- FUSION TECHNOLOGY. vol. 16, November 1989, LAGRANGE PARK, ILLIN pages 404 - 407; EWING ET AL: "NEGATIVE RESULTS AND POSITIVE ARTIFACTS OBSERVED IN A COMPREHENSIVE SEARCHFOR NEUTRONS FROM COLD FUSION USING A MULTIDETECTOR SYSTEM LO CATED UNDERGROUND"
- FUSION TECHNOLOGY. vol. 16, November 1989, LAGRANGE PARK, ILLIN pages 401 - 403; KAMM ET AL: "SEARCH FOR NEUTRONS FROM A TITANIUM-DEUTERIUM SYSTEM"

## Description

The present invention relates to a system for producing neutrons and heat by nuclear fusion in a gas absorbed on a metal and is particularly concerned with a system for the "cold" fusion of deuterium nuclei for obtaining neutrons and heat.

As is well-known, such a reaction may evolve according to two different channels. The two best known of them are: a method which gives tritium and one proton, and another one which gives helium and a 2,45 MeV neutron, with nearly equal probabilities.

The two deuterium nuclei repel each other, each one of them being charged with an electric charge equal to the electron charge, of positive sign.

It is therefore necessary to overcome the repulsion force and to force the two nuclei to approach each other for allowing them to merge. Because of the existing tunnel effect, it is not necessary to bring the two nuclei in contact because, although the energy supplied to them is power than the maximum energy corresponding to the coulombian force field which they exchange, there is a non-zero probability for the fusion reaction to occur and such a probability increases as the mutual distance at which the two nuclei lie increases.

There are three principal methods heretofore employed for obtaining fusion reactions: one is the magnetic confinement method; another is the inertial confinement method; both of them bring matter by means of different methods to a temperature of some tens of millions of degrees so as to form an ion and electron plasma; the third one is that studied in the so called muonic fusion in which muonic molecules of deuterium and tritium are realized having a normal electron substituted with a muon, a particle of a very short life-time, little more than two millionths of a second, with the same charge and a mass equal to two hundred times that of the electron. The mass of the muon has the effect of reducing the dimensions of the atom to two hundredths of the normal ones and hence of making the fusion reactions much more probable.

The news has been recently given of two experimental processes in which it seems that a cold fusion might be spoken of. The authors of such processes are respectively professor Fleishmann and professor Pons of the Utah University and professor Jones of Brigham Young University in Utah in the United States. Such processes will be now illustrated in their general lines for pointing out the novelty characteristics of the system of the present invention.

In the experiment of Jones and coworkers, small electrolytic cells of very small sizes, about 6 cm in diameter, have been employed, with a cathode made up of palladium or titanium and a gold anode. The electrolyte is obtained by dissolving in heavy water a mixture of salts which tend to reproduce some compositions typical of the earth crust. One of the objects of this research was to demonstrate the possibility for "cold" fusion reactions to occur in the depths of the Earth, these being at least partially the origin of the heat generated in the earth's interior. With a voltage applied across the electrodes and passing an electric current, a neutron emission has been recognized. Jones has employed a high-sensitivity neutron detector which makes use of refined discrimination systems and has performed high accuracy measurements, and obtained neutron counts of the order of some units per hour, greater than the natural background by a factor of about three. By going back to the intensity of the source consisting, according to their judgement, of the cathode, fluxes are obtained of the order of 0,4 n/s. However, Jones hasn't performed energy balances, nor has he checked the presence of reaction products, ³He or tritium, though he has ascertained the correctness of the observed effect by comparison with a normal water cell. Jones believes he is in the presence of an effect catalysing the reaction deuterium-deuterium due to the presence of quasi-electrons in the deuterium-filled metal matrix, with masses equal to a few times that of the free electrons, because of the deuterium accumulation in the defects of the metal matrix itself.

Fleishmann and Pons have conversely started from the observation that the electrochemical potentials present at the surface of a deuterium-filled palladium cathode would require, if they were to be electrochemically reproduced by employing gasseous deuterium, very high pressures and correspondingly high deuterium densities, such as to allow the nuclei to approach each other and more probably to react.

They have then carried out some experiments with Li0D solutions, in heavy water, with palladium cathodes and platinum anodes in various cells of relatively large sizes. They have carried out high accuracy calorimetric measurements, whereas they have employed a less sensitive instrumentation for detecting both gamma rays emitted from the water bath by reaction of the 2,45 MeV with the protons, and the cathode-emitted neutrons.

Fleishmann and Pons also have recorded a number of counts of a few units per hour, greater than the background by a factor of about three, from which they have gone back to neutronic fluxes of about 4 x 10⁴ n/s. They have also verified the presence of a corresponding tritium amount. The surprising effect recognized by them is however a noticeable heat generation, greater than that corresponding, based on the "classical" reactions, to the detected neutrons number by a factor of about three. They have indeed estimated the development of about 10 W per cm³ of the cathode, a number which corresponds to that hypothesized in a hot plasma fusion reactor. The heat generated has turned out to be proportional to the current density applied across the electrodes and to the volume of the electrodes themselves.

It is therefore apparent that, whereas in the case of Jones' experiment the interest is apparently purely scientific and is bound to the determination of properties or effects related to the behavior of the crystal structure of some particular metals, in the case of the experiment of Fleishmann and Pons, the interest turns out to be bound to the magnitude of the power generation and to the fact that, if all the reported data were to be validated by further experiments, in particular as regards the thermonuclear origin of the power, there would be a new type of nuclear reactions.

The object which the present invention aims at is to devise a system, considered also in the form of an equipment, which represents a novel approach to the cold fusion of deuterium nuclei.

A more particular object is to suggest an equipment different from an electrolytic cell and thus free from electrodes and consequently free from current passage. Such an object may also be expressed as that of implementing an equipment which doesn't necessitate the use of electrolytes.

The present invention therefore suggests an equipment according to claim 1 in which it is taken advantage of a gaseous deuterium supply and it isn't made use of heavy water.

The equipment employs titanium or metals with similar characteristics, in particular with a high capacity of adsorption and/or absorption of hydrogen and its isotopes.

The present invention also suggests a procedure for the cold fusion of deuterium nuclei as defined in claim 6, in which the three parameters of temperature, pressure and concentration of deuterium in titanium or other metal, as above mentioned, are acted upon.

For achieving the objects disclosed above it has been started out with the idea of verifying the possibility of achieving deuterium-deuterium reactions in the presence and/or at the interior of a metal (titanium has been chosen for its availability) endowed with a high capability of absorption for hydrogen and its isotopes, preferably employed in a form with a high surface/volume ratio, like in particular sponges, chips, powders, etc., in a deuterium atmosphere with variable pressure and temperature.

The measured neutron emission has turned out to be of levels markedly greater than the background (by 1 to 3 magnitude orders), with emissions in the order of 10³ n/s.

The conditions under which it has been possible to carry out the measurement relate to two sets of very different thermodynamical parameters:
1. deuterium at about 3,99 MPa (40 bar) in contact with titanium at temperatures which vary between about 77 K and about 300 K in the presence of titanium which is supposedly deuterium free (nearly in the absence of titanium hydride);
2. under the opposite condition, i.e. with a probable presence of hydride, with a very low pressure (1,33 Pa) (about 10⁻² torr) and a temperature which rises back to the room temperature.

It is reasonable to believe that the observed phenomena are correlated to a phase transition, in the two senses, of the deuterium-titanium system. It is not to be excluded that situations can occur of the type of the "supersaturation", which could justify a sudden translation in a certain neighborhood.

The above results have been obtained with an equipment which, in its fundamental, even if not all essential, components, comprises essentially a reaction vessel immersed in a temperature-controlled environment, containing titanium in a physical form with a high surface/volume ratio, such as chips, sponges, powders, etc., connected to a gasseous deuterium supply, through a pressure reducer, a vacuum pump and a pressure gage with a set of valves downstream of the deuterium supply and upstream of the reaction vessel, as well as a thermocouple for the measurement of the temperature in the latter.

In the preferred embodiment, the temperature-controlled environment is a Dewar vessel and the control of the temperature is effected by introducing into and drawing from it liquid nitrogen or other coolant.

Further details and advantages of the present invention will become apparent by the following description, with reference to the enclosed drawings in which the preferred embodiment is depicted by way of illustration and not of limitation.

In the drawings:
figure 1 shows a schematic view of the equipment for the cold fusion of deuterium nuclei with generation of neutrons and heat;

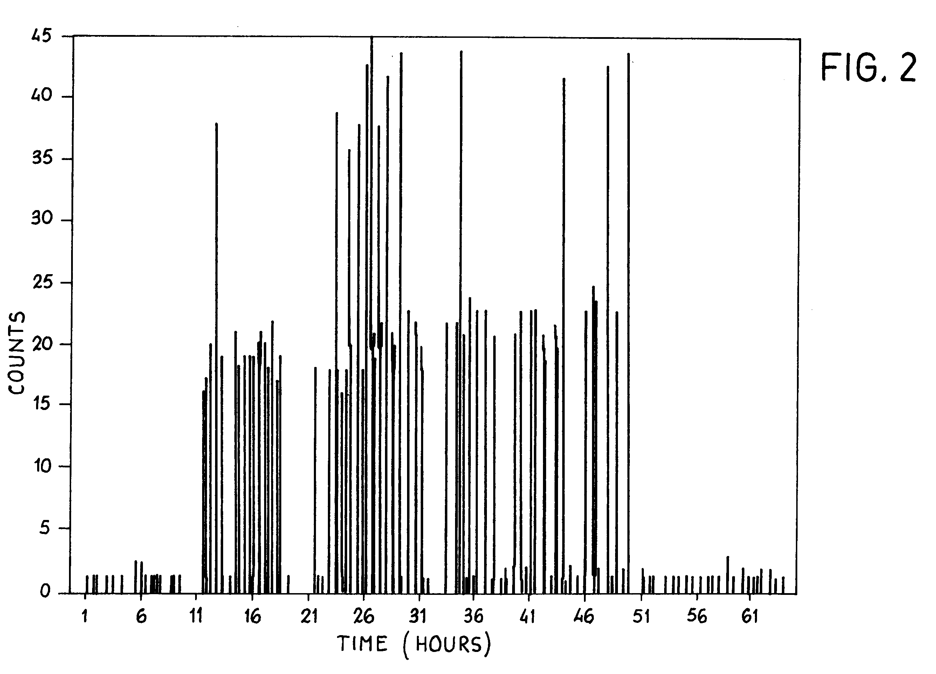

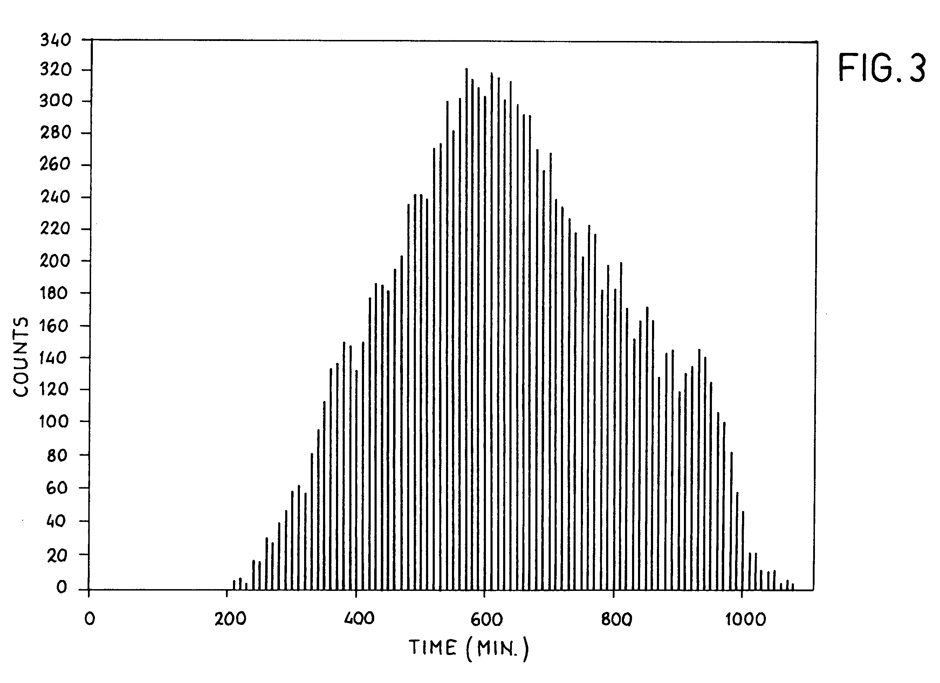

figures 2 and 3 show two graphs which show the neutronic count as a function of time, and which refer to two experiments carried out with the equipment of figure 1.

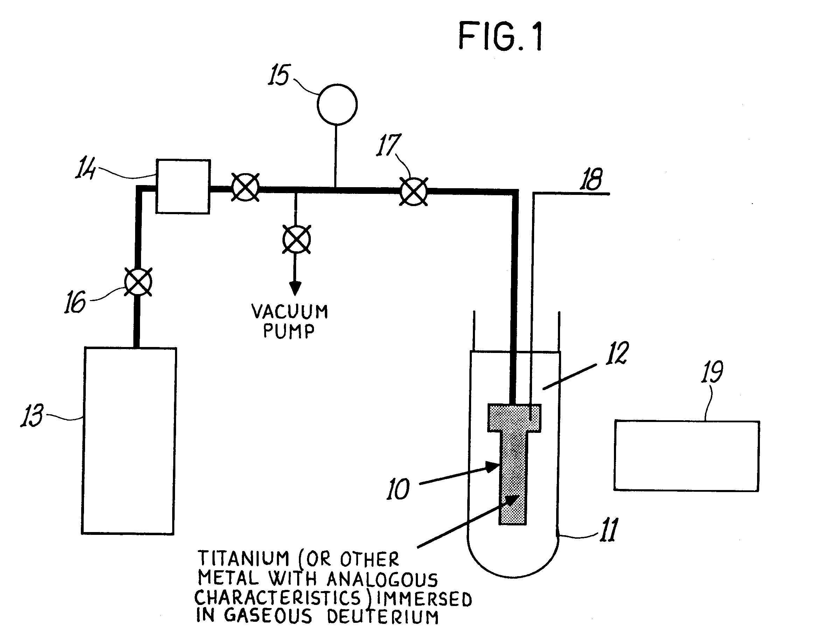

With reference now to figure 1, it is seen that the equipment comprises a reaction vessel 10 containing titanium or other metal having the already mentioned characteristics, in such a form as to expose a large surface of the metal to the gas. The vessel is immersed in an environment suitable for controlling its temperature, e.g. a Dewar vessel 11 into which liquid nitrogen 12 is introduced.

The reaction vessel is connected to a supply 13 of gaseous deuterium and to a vacuum pump, with a pressure reducer 14, a pressure gage 15 and stop valves 16, 17 downstream of the deuterium supply and upstream of the reaction vessel. The temperature of the reaction vessel is measured by means of a thermocouple 18 and the state of the fusion reaction is monitored with a neutron detector 19.

By way of indication, the following procedure can be exemplified. After having closed the deuterium outlet valve 16, vacuum is made by means of the vacuum pump and then gaseous deuterium is introduced in the reaction vessel 10 through the pressure reducer 14 under pressure control by means of the respective gage 15.

Then the temperature is varied by introducing or extracting liquid nitrogen or other coolant from the Dewar vessel 11.

It has been recognized, that it is not the static temperature and pressure conditions that allow the reaction to develop, but the dynamic variations of such parameters through a range from pressures largely higher to pressures largely lower than the atmospheric pressure, in particular in the range between about 3,99 MPa (40 bar) and about 1,33 Pa (10⁻² torr) and temperatures which vary between cryogenic temperatures and room or higher temperatures, in particular between about 77 K and about 300 K.

It should be emphasized at this point that, even if the nuclear fusion has been heretofore discussed, the term fusion should not be construed so as to limit all of the phenomena that are exploited at the nuclei level to a strictly defined fusion, but it should be understood that the invention can be implemented in the same way even if such nuclear phenomena are of some other kind and, therefore, the term "nuclear fusion" should be used interchangeably with the term "nuclear reaction".

Furthermore, even if the term "gaseous deuterium" has been used, it should be understood that deuterium-enriched hydrogen can be used in stead of pure deuterium: in fact, in view of this, when the properties of the metal have been discussed, the metal has been quoted as adapted to absorb/adsorb hydrogen and its isotopes.

In the above specification the preferred form of embodiment has been disclosed and some alternative feasible solutions have been indicated, but it is to be expressedly intended that further modifications and variations can be made by those who are skilled in the art, without so departing from the scope of the enclosed claims.

## Claims

1. A system for producing neutrons and heat by nuclear reaction in a gas adsorbed and/or absorbed on a metal by means of an equipment which comprises as fundamental components: a reaction vessel (10) immersed in a temperature-controlled environment (11), for varying the temperature thereof in the range between about 77 K and about 300 K, containing a metal with a high capacity of adsorption and/or absorption for hydrogen and its isotopes, in such physical form as to expose a large surface of the metal to the gas, said vessel being connected to a gaseous deuterium supply (13), through a pressure reducer (14), a vacuum pump ana a pressure gage (15) for varying the pressure thereof in the range from about 3,99 MPa (40 bar) to about 1,33 Pa (10⁻² torr), valves (16, 17) being provided downstream of the deuterium supply (13) and upstream of the reaction vessel (10), as well as a thermocouple (18) for measuring the temperature of the said metal.

2. A system according to claim 1, in which said metal is titanium.

3. A system according to claim 1, in which said metal is employed in the physical form of sponges, chips, powders and the like with a high surface/volume ratio.

4. A system according to any of the preceding claims in which said environment (11) is a Dewar vessel and the control of the temperature is effected by introducing therein liquid nitrogen or other coolant.

5. A system according to claim 1, wherein said gaseous deuterium supply consists of deuterium-enriched hydrogen.

6. A process for producing neutrons and heat by nuclear reaction in a gas absorbed and/or absorbed on a metal, consisting in making gaseous deuterium to contact with a metal having a high capacity of absorption and/or adsorption for hydrogen and its isotopes, in such a physical form as to expose a large surface of the metal to the gas under conditions of a pressure which is caused to vary in the range between about 3,99 MPa (40 bar) and about 1,33 Pa (10⁻² torr) and of a temperature which is caused to vary in the range between about 77 K and about 300 K.

## Patentansprüche

1. Anordnung zur Erzeugung von Neutronen und Wärme durch Nuklearfusion in einem Gas, das von einem Metall adsorbiert und/oder absorbiert ist, wobei folgende gründsätzliche Bestandteile vorgesehen sind: ein Reaktionsbehälter, der in einer temperatur-kontrollierten Umgebung (11) eingetaucht ist, um seine Temperatur in einem Bereich von etwa 77K bis etwa 300K zur ändern und ein Metall mit einer hohen Ab-und/oder Adsorbtion-Kapazität von Wasserstoff und seinen Isotopen und zwar in einer solchen physikalischen Form, dass eine grosse Fläche des Metalls an das Gas ausgesetzt ist, wobei dieser Behälter mit einer Quelle von gasförmigem Deuterium über einen Druckuntersetzer (14) verbunden ist, eine Vakuumpumpe und ein Druckermittler (15) zur Aenderung des Druckes derselben in einem Bereich von etwa 3,99 Mpa (40 bar) bis etwa 1,33 Pa (10⁻² Torr), wobei stromabwärts der Deuterium-Quelle(13) und stromaufwärts des Reaktionsbehälter (10) Ventile (16,17) angeordnet sind, sowie ein Thermoelement (18) zur Messung der Temperatur des vorgenannten Metalls.

2. Anordnung nach Anspruch 1, worin das vorgenannten Metall Titanium ist.

3. Anordnung nach Anspruch 1, worin das vorgennante Metall in der physikalischen Form von Schaum, Splitter, Staub und dergleichen mit einem hohen FlächeNolumen-Verhältnis angewandt wir.

4. Anordnung nach je einem der vorausgehenden Ansprüche, worin die vorgennnte Umgebung (11) ein Dewar-Behälter ist und die Temperatur durch Einführung des flüssigem Stickstoffs oder eines anderen Kühlmittels beeinflusst wird.

5. Anordnung nach Anspruch 1, worin die vorgenannte Quelle des gasförmigen Deuteriums aus einem mit Deuterium eingereichten Wasserstoff besteht.

6. Verfahren zur Erzeugung von Neutronen und Wärme durch Nuklearfusion in einem Gas, das von einem Metall ab- und/oder adsorbiert ist, worin gasförmiges Deuterium in Berührung mit einem Metall gebracht wird, das eine grosse Ab- und/oder Adsorbtion-Kapazität von Wasserstoff und seinen Isotopen hat und zwar in einer solchen physikalischen Form, dass eine grosse Fläche des Metalls an das Gas ausgesetzt ist, wobei die Druckbedingungen in einem Bereich von etwa 3,99 Mpa (40 bar) bis etwa 1,33 Pa (10⁻² Torr) und die Temperaturbedingungen in einem Bereich von etwa 77K etwa 300K veränderbar sind.

## Revendications

1. Dispositif pour la production de neutrons et de chaleur par fusion nucléaire dans un gaz absorbé et/ou adsorbé par un métal au moyen d'un équipement comprenant comme éléments fondamentaux: un récipient de réaction (10) plongé dans un milieu à température controllée (11) pour changer son température dans un intervalle entre environ 77 K et environ 300 K et contenant un métal ayant une grande capacité d'absorbtion et/ou adsorbtion d'hydrogène et de ses isotropes, dans une forme physique susceptible d'exposer au gaz une grande surface du métal, ledit récipient étant joint par un réducteur de pression (14) à une source de deutérium gazeux (13); une pompe à vide et un senseur de pression (15) pour changer sa pression dans un intervalle entre environ 3,99 Mpa (40 bar) et environ 1,33 Pa (10⁻² torr); des vannes (16, 17) étant placées en aval de la source de dentérium et en amont du récipient de réaction; ainsi que une thermocouple (18) pour mesurer la température dudit métal.

2. Dispositif selon la revendication 1, dans lequel ledit métal est titanium.

3. Dispositif selon la revendication 1, dans lequel ledit métal est employé dans la forme physique d'une éponge, des éclats, de poussière et pareils avec un haut rapport surface/volume.

4. Dispositif selon une quelconque des revendications précédentes, dans lequel ledit milieu (11) et un récipient Denver et le contrôle de la température est effectué par introduction de nitrogène liquide ou d'un autre caloporteur.

5. Dispositif selon la revendication 1, dans lequel ledit deutérium gazeux consiste d'hydrogène enrichi du dentérium.

6. Procédé pour la production de neutrons et de chaleur par fusion nucléaire dans un gaz adsorbé et/ou absorbe par un métal, consistant en mettre deutérium gazeux à contact avec un métal ayant une grande capacité d'absorbtion ou d'adsorbtion d'hydrogène et des son isotropes dans une forme physique susceptible d'exposer au gaz une grande surface du métal à condition de pression variable dans l'intervalle entre environ 3,99 Mpa (40 bar) et environ 1,33 Pa (10⁻² torr) et de température variable dans l'intervalle entre environ 77 K et environ 300 K.
